# EUROPÄISCHE PATENTSCHRIFT

(11) **EP 3 645 818 B1**
(45) Veröffentlichungstag und Bekanntmachung des Hinweises auf die Patenterteilung: **07.07.2021**
(21) Anmeldenummer: 18735233.1
(22) Anmeldetag: 22.06.2018
(51) Int. Cl.: E05F 5/10, E05F 3/12, E05F 5/00

(54) **DÄMPFER**
DAMPER
AMORTISSEUR

(30) Priorität: 29.06.2017 DE 102017114475
(43) Veröffentlichungstag der Anmeldung: 06.05.2020
(73) Patentinhaber: Druck- und Spritzgußwerk Hettich GmbH & Co. KG, 35066 Frankenberg (DE)
(72) Erfinder: WEBER, Konrad, 35085 Ebsdorfergrund (DE)
(74) Vertreter: Dantz, Jan Henning
(86) Internationale Anmeldenummer: PCT/EP2018/066770
(87) Internationale Veröffentlichungsnummer: WO 2019/002130

(56) Entgegenhaltungen:
- EP-A1- 1 703 166
- EP-A1- 2 006 480
- EP-A1- 2 546 443
- WO-A1-2007/116273
- WO-A1-2012/137042
- WO-A2-2012/156949
- DE-A1- 3 629 594

## Beschreibung

Die vorliegende Erfindung betrifft einen Dämpfer für Beschläge für Möbel oder Haushaltsgeräte, mit einem Gehäuse, in dem ein mit einer Kolbenstange verbundener Kolben linear verschiebbar geführt ist, der einen Innenraum in dem Gehäuse in zwei Kammern unterteilt, wobei an oder in dem Kolben mindestens ein Strömungskanal ausgebildet ist, der die beiden Kammern miteinander verbindet, wobei ein Drosselelement vorgesehen ist, das in einer Dämpfungsposition bei einer Bewegung des Kolbens in eine erste Richtung den Querschnitt des mindestens einen Strömungskanals zur Erzeugung hoher Dämpfungskräfte gering hält und bei einer Bewegung des Kolbens in die zur ersten Richtung gegenüberliegende zweite Richtung den Querschnitt des mindestens einen Strömungskanals zur Reduzierung der Dämpfungskräfte durch eine Bewegung des Drosselelements vergrößert, wobei das Drosselelement durch mindestens ein Federelement in die Dämpfungsposition vorgespannt ist und der Kolben über eine Feder in eine Position mit ausgefahrener Kolbenstange vorgespannt ist.

Die EP 2 006 480 B1 offenbart einen Dämpfer für Möbel, der ein Dämpfergehäuse umfasst, in dem ein mit einer Kolbenstange verbundener Kolben verschiebbar geführt ist. In dem Kolben ist ein Strömungskanal ausgebildet, der zur Erzeugung unterschiedlicher Dämpfungskräfte im Querschnitt veränderbar ist. Hierfür kann ein axial verschiebbarer Kolbenring vorgesehen sein, der den Querschnitt des Strömungskanals bei einer Bewegung des Kolbens in eine erste Richtung verringert und in eine gegenüberliegende zweite Richtung vergrößert, so dass bei einer Bewegung des Kolbens in unterschiedliche Richtungen auch unterschiedlich hohe Dämpfungskräfte erzeugt werden. Durch den verschiebbaren Kolbenring tritt allerdings das Problem auf, dass am Anfang einer Dämpfungsbewegung der Kolbenstange ein Leerhub auftritt, da der Kolbenring zunächst zur Verringerung des Strömungskanals relativ zu dem Kolben bewegt werden muss. Ein solcher Leerhub verringert die effektive Nutzlänge des Dämpfungshubes, was gerade bei kurzen Dämpfungswegen nachteilig ist. Der Kolbenring kann auch durch eine elastische Platte ersetzt werden, die sich bei einer Bewegung des Kolbens entgegen der Dämpfungsrichtung von dem Kolben weg biegen kann, um den Querschnitt des Strömungskanals zu vergrößern. Der Einsatz solcher biegbaren Platten besitzt allerdings den Nachteil, dass diese schnell verschleißen und sich die Rückstellkräfte verringern, so dass auch hier am Anfang der Hubbewegung der Strömungskanal nur unzureichend verengt wird.

Die EP 2 546 443 A1 offenbart einen Türdämpfer mit einem Kolben, der in einem Dämpfergehäuse verschiebbar ist. An dem Kolben ist eine biegbare Platte gehalten, die in einer flachen Position einen Strömungskanal überdeckt und in einer gebogenen Position den Strömungskanal freigibt.

Es ist daher Aufgabe der vorliegenden Erfindung, einen Dämpfer für Beschläge für Möbel oder Haushaltsgeräte zu schaffen, bei dem der Leerhub reduziert ist und der eine lange Lebensdauer besitzt.

Diese Aufgabe wird mit einem Dämpfer mit den Merkmalen des Anspruches 1 gelöst.

Bei dem erfindungsgemäßen Dämpfer ist der Querschnitt mindestens eines Strömungskanals zur Erzeugung hoher Dämpfungskräfte oder geringer Dämpfungskräfte veränderbar über ein Drosselelement, das bewegbar ist und durch mindestens ein Federelement in die Dämpfungsposition vorgespannt ist. Dies ermöglicht die Reduzierung des Leerhubes, da das Drosselelement nach einer Rückstellbewegung des Dämpfers und einem Druckausgleich zwischen den beiden Kammern wieder in eine Dämpfungsposition bewegt wird, bei der der Querschnitt des mindestens einen Strömungskanals gering ist. Wird nun eine Bewegung der Kolbenstange relativ zu dem Gehäuse eingeleitet, kann sich nach nur minimalem Hub ein unterschiedlicher Druck in den beiden Kammern aufbauen, der zu einer Strömung durch den mindestens einen Strömungskanal und den hohen Dämpfungskräften führt.

Vorzugsweise sind das Drosselelement und das mindestens eine Federelement aus unterschiedlichen Materialien hergestellt. Das mindestens eine Federelement ist vorzugsweise biegbar und beispielsweise aus einem elastischen Kunststoff hergestellt, wobei auch metallische Materialien bei entsprechender dünner Wandstärke eingesetzt werden können. Das Drosselelement ist vorzugsweise starr ausgebildet und besitzt zumindest an einer zu dem Strömungskanal gewandten Kontaktfläche eine hohe Oberflächenhärte, so dass der Verschleiß gering gehalten wird. Das Drosselelement ist vorzugsweise aus einem härteren Material hergestellt als das biegbare Federelement.

Vorzugsweise ist das Drosselelement klemmend zwischen einem Halter und dem Federelement festgelegt. Dadurch ist das Drosselelement auch in einer Dämpfungsposition durch das Federelement fixiert, und nur nach Überwindung der Federkräfte des Federelementes kann das Drosselelement von dem Halter abgehoben werden. Bei einer Rückstellbewegung des Kolbens wird somit ein gewisser Druckunterschied zwischen den beiden Kammern erforderlich, um das Drosselelement von dem Halter abheben zu können.

Das Drosselelement ist erfindungsgemäß als Kolbenring ausgebildet. Der Kolbenring kann auf einfache Weise positionsgenau in dem Gehäuse geführt werden. Eine Außenseite des Kolbenringes kann dabei an einer Innenseite des topfförmigen Gehäuses geführt sein.

In einer erfindungsgemäßen Ausgestaltung ist ein an der Kolbenstange festgelegtes Fixierelement vorgesehen, das ein integral ausgebildetes Federelement aufweist, mittels dem der Kolbenring oder das Drosselelement zu einem mit der Kolbenstange verbundenen Halter vorgespannt ist. Dadurch kann die Vorspannung des Drosselelementes oder des Kolbenringes mit nur wenigen Bauteilen erfolgen, nämlich einerseits einem mit der Kolbenstange verbundenen Halter, der auch integral mit der Kolbenstange ausgebildet sein kann, und einem Fixierelement, an dem das Federelement integral ausgebildet ist. Dadurch kann die Einheit aus Kolben und Kolbenstange aus nur drei Teilen hergestellt werden. Das Fixierelement kann beispielswiese einen Stift aufweisen, der in einer hülsenförmigen Kolbenstange festgelegt ist, insbesondere durch Klemmkräfte.

Der Kolben ist vorzugsweise über eine Feder in eine Position mit ausgefahrener Kolbenstange vorgespannt. Dann ist der Dämpfer als Druckdämpfer ausgebildet, der beim Einschieben der Kolbenstange in das Gehäuse hohe Dämpfungskräfte bereitstellt und eine Rückstellung durch die Feder erfolgt, die die Kolbenstange aus dem Gehäuse herausschiebt.

Das Gehäuse kann topfförmig ausgebildet sein und an einem Bereich benachbart zu einer Öffnung eine Dichtung aufweisen, die eine Öffnung zur Durchführung der Kolbenstange aufweist. Die Dichtung ist vorzugsweise für einen Volumenausgleich durch das Einschieben oder Herausziehen der Kolbenstange verschiebbar an dem Gehäuse gelagert. Optional kann die Dichtung über einen Deckel in dem Gehäuse gehalten sein, wobei der Deckel ein an dem Gehäuse festgelegtes Außenteil und ein an der Dichtung liegendes Innenteil aufweisen kann, wobei das Außenteil mit dem Innenteil über mindestens einen Federarm verbunden ist, so dass die Dichtung über den Deckel gehalten ist und optional auch zu dem Innenraum des Gehäuses hin vorgespannt sein kann.

Für eine exakte Positionierung von Dichtung und/oder Deckel kann an dem topfförmigen Gehäuse auf der zu einem Boden gegenüberliegenden Seite mindestens eine Stufe vorgesehen sein, vorzugsweise zwei Stufen, die jeweils einen zylindrischen Abschnitt mit unterschiedlichem Durchmesser ausbilden. Der Durchmesser kann sich dabei zur Öffnung des Gehäuses hin vergrößern, so dass eine einfache Montage von Dichtung und Deckel möglich ist.

Der Dämpfer ist vorzugsweise besonders kompakt ausgebildet, und der maximale Hub der Kolbenstange ist vorzugsweise kleiner als 6 mm, insbesondere liegt er zwischen 3 mm bis 5 mm. Die Gesamtlänge des Dämpfers kann kleiner als 20 mm sein, insbesondere kleiner als 18 mm mit ausgefahrener Kolbenstange.

Vorzugsweise ist das Drosselelement als Kolbenring ausgebildet, der einen Strömungskanal mit einer ersten radial innen liegenden Mündung und einer zweiten radial außen liegenden Mündung aufweist. Die beiden Mündungen können dabei in einem vorbestimmten Winkelabstand zueinander angeordnet sein, beispielsweise zwischen 90° und 270°, so dass der Strömungskanal nicht nur radial, sondern auch im Wesentlichen parallel zum Umfang verläuft. An zumindest einer Mündung kann dabei eine Stufe ausgebildet sein, insbesondere eine ringförmige Stufe, die als Aussparung ausgebildet ist. Dadurch wird verhindert, dass die Strömungsverhältnisse beeinflusst werden, wenn ein Halter einen Mündungsbereich überdeckt. Der Mündungsbereich befindet sich somit in der Aussparung oder Stufe, so dass eine Überdeckung des Strömungskanals im Bereich der Mündung sich nicht oder nur geringfügig auf die Dämpfungseigenschaften auswirkt. Eine außermittige Anordnung eines mit dem Kolben verbundenen Halteelementes zum Drosselelement ändert somit nicht die Dämpfungseigenschaften.

Erfindungsgemäß wird auch ein Beschlag eines Möbels oder eines Haushaltsgerätes mit einem solchen Dämpfer bereitgestellt, beispielsweise einem Scharnier, bei dem der Dämpfer zum Dämpfen einer Schließ- und/oder Öffnungsbewegung eingesetzt wird.

Die Erfindung wird nachfolgend anhand eines Ausführungsbeispiels mit Bezug auf die beigefügten Zeichnungen näher erläutert. Es zeigen:

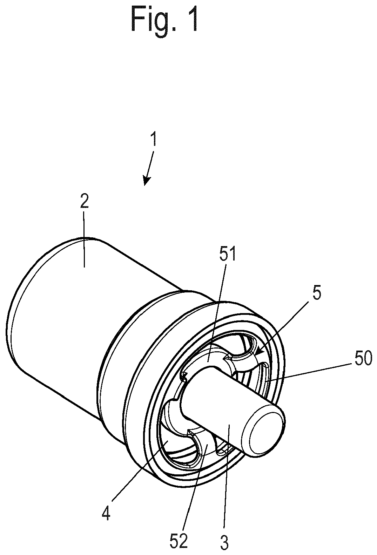

- Figur 1: eine perspektivische Ansicht eines erfindungsgemäßen Dämpfers;
- Figur 2: eine perspektivische Explosionsdarstellung des Dämpfers der Figur 1;
- Figuren 3A und 3B: zwei Ansichten des Dämpfers in einer Ausgangsposition;
- Figuren 4A und 4B: zwei Ansichten des Dämpfers beim Einschieben der Kolbenstange;
- Figuren 5A und 5B: zwei Ansichten des Dämpfers mit eingeschobener Kolbenstange;
- Figuren 6A und 6B: zwei Ansichten des Dämpfers beim Ausfahren der Kolbenstange;
- Figuren 7A und 7B: zwei Ansichten des Dämpfers mit ausgefahrener Kolbenstange;
- Figuren 8A und 8B: zwei Ansichten eines Scharniers mit einem erfindungsgemäßen Dämpfer;
- Figuren 9A und 9B: zwei Ansichten eines Kolbenringes mit einem modifizierten Strömungskanal;
- Figuren 10A und 10B: zwei schematische Ansichten des Drosselelementes der Figur 9 innerhalb des Gehäuses;
- Figuren 11A bis 11C: mehrere Ansichten des Drosselelementes der Figur 10 mit unterschiedlichen Positionen des Halters;
- Figuren 12A bis 12C: mehrere Ansichten eines modifizierten Drosselelementes;
- Figur 13: eine Ansicht des Drosselelementes der Figur 12 zusammen mit dem Halteelement, und
- Figur 14: eine Ansicht des Drosselelementes der Figur 12 in einer schematisch dargestellten eingebauten Situation.

Ein Dämpfer 1 ist als Lineardämpfer ausgebildet und umfasst ein topfförmiges Gehäuse 2, an dem eine Kolbenstange 3 linear verschiebbar ist. Die Kolbenstange 3 ist im Innenraum mit einem Kolben verbunden und an einer Öffnung des Gehäuses 2 durch einen Deckel 5 durchgeführt, der ein ringförmiges an dem Gehäuse 2 festgelegtes Außenteil 50 besitzt und ein Innenteil 51 aufweist. Das Innenteil 51 hält eine Dichtung 4 in dem Gehäuse 2, wobei die Dichtung 4 in Längsrichtung der Kolbenstange 3 verschiebbar ist und das Innenteil 51 relativ zu dem Außenteil 50 über Federarme 52 bewegbar ist.

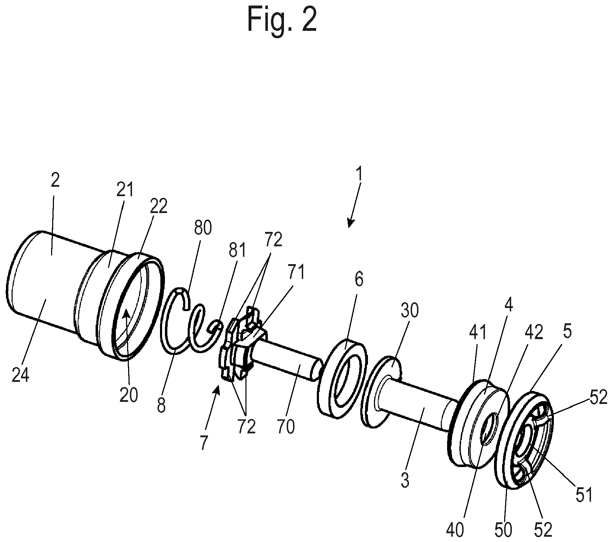

In Figur 2 ist der Dämpfer 1 in einer Explosionsdarstellung gezeigt. Es ist erkennbar, dass die Kolbenstange 3 durch eine innere Öffnung 40 an einer Dichtung 4 durchgeführt ist, wobei die Dichtung 4 eine äußere Dichtlippe 41 oder einen Dichtwulst und eine innere Dichtlippe 42 oder einen Dichtwulst aufweist.

Die Kolbenstange 3 ist integral mit einem scheibenförmigen Halter 30 ausgebildet oder mit einem solchen Halter verbunden, an dem ein Drosselelement 6 in Form eines Kolbenringes gehalten ist. Das Drosselelement 6 ist dabei zwischen einem Abschnitt eines Fixierelementes 7 und dem Halter 30 angeordnet.

Das Fixierelement 7 umfasst einen Stift 70, der in die hülsenförmige Kolbenstange 3 eingefügt ist und dort fixiert ist, insbesondere über Klemmkräfte, über Verkleben oder andere Befestigungsmittel. Das Fixierelement umfasst eine mit dem Stift 70 verbundene Basis 71, an der Federelemente 72 hervorstehen, die zur elastischen Lagerung des Drosselelementes 6 dienen.

Ferner ist eine Feder 8 vorgesehen, die mit einem ersten Ende 80 an einem Boden des topfförmigen Gehäuses 2 abgestützt ist und mit einem gegenüberliegenden Ende 81 das Fixierelement 7 und damit die Kolbenstange 3 in eine ausgefahrene Position vorspannt. Die Feder 8 ist spiralförmig mit einem durchgängig unterschiedlichen Wicklungsdurchmesser ausgebildet, so dass sie beim Zusammendrücken flach auf einen Boden des Gehäuses 2 anpressbar ist.

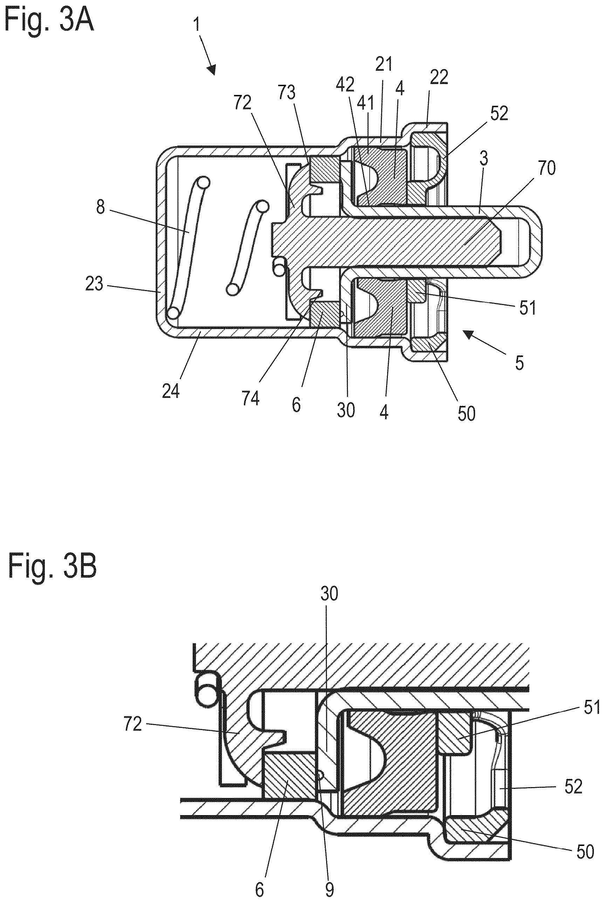

In den Figuren 3A und 3B ist der Dämpfer 1 in einer Ausgangsposition mit ausgefahrener Kolbenstange 3 gezeigt. Es ist erkennbar, dass das Gehäuse 2 einen Boden 23 aufweist, an dem die Feder 8 abgestützt ist. An dem Boden 23 schließt sich ein erster zylindrischer Abschnitt 24 an, an dem der Kolben des Dämpfers 1 linear geführt ist. Der Kolben umfasst dabei das Drosselelement 6, den Halter 30 und das Fixierelement 7, die als Einheit bewegbar sind. An dem Fixierelement 7 sind integral mehrere Federelemente 72 ausgebildet, die mit einer Kontaktfläche 73 an dem Drosselelement 6 anliegen und diesen gegen den Halter 30 vorspannen.

An dem Gehäuse 2 ist eine erste Stufe 21 mit einem zylindrischen Abschnitt mit größerem Durchmesser als der Abschnitt 24 ausgebildet, in dem die Dichtung 4 aufgenommen ist. Die Dichtung 4 liegt mit der äußeren Dichtlippe 41 an dem zylindrischen Abschnitt der Stufe 21 und mit einer inneren Dichtlippe 42 an dem äußeren Umfang der Kolbenstange 3 an.

An dem Gehäuse 2 ist benachbart zu der ersten Stufe 21 eine zweite Stufe 22 ausgebildet, die einen zylindrischen Abschnitt mit einem etwas größeren Durchmesser als die erste Stufe 21 aufweist. An der zweiten Stufe 22 ist der Deckel 5 festgelegt, wobei an dem Übergang zwischen der ersten Stufe 21 und der zweiten Stufe 22 das ringförmige Außenteil 50 fixiert ist, das über Federarme 52 mit dem ringförmigen Innenteil 51 verbunden ist. Dadurch wird die Dichtung 4 über das Innenteil 51 gehalten und optional auch zu dem Innenraum des Gehäuses 2 hin vorgespannt.

In Figur 3B ist der Bereich des Drosselelementes 6 im Detail dargestellt. Der Kolben an dem Dämpfer 1 unterteilt den Innenraum 20 des Gehäuses in zwei Kammern, die in den Figuren rechts und links eines Strömungskanals 9 an dem Kolben angeordnet sind. Der Strömungskanal 9 ist durch eine Nut an dem Halter 30 ausgebildet und verbindet eine Kammer auf der rechten Seite des Halters 30 mit einer Kammer auf der linken Seite des Halters 30. Der Strömungskanal 9 besitzt einen geringen Querschnitt, der durch das Drosselelement 6 zumindest teilweise überdeckt wird. Das Drosselelement 6 ist dabei durch ein oder mehrere Federelemente 72 zu dem Halter 30 hin vorgespannt und überdeckt den Strömungskanal 9 zumindest bereichsweise. Es ist natürlich möglich, an dem Halter 30 mehrere Strömungskanäle 9 vorzusehen oder den Strömungskanal an dem Drosselelement 6 auszubilden und den Halter 30 eben oder mit weiteren Strömungskanälen vorzusehen. In jedem Fall bildet der mindestens eine Strömungskanal 9 einen durchströmbaren Querschnitt zwischen den beiden Kammern, wobei ein geringer Querschnitt des Strömungskanals 9 für hohe Dämpfungskräfte beim Bewegen der Kolbenstange 3 relativ zu dem Gehäuse 2 sorgt. Als Dämpfungsfluid ist in dem Gehäuse 2 vorzugsweise eine Flüssigkeit, wie Öl, insbesondere Silikonöl, vorgesehen, wobei auch andere Flüssigkeiten oder Gase eingesetzt werden können.

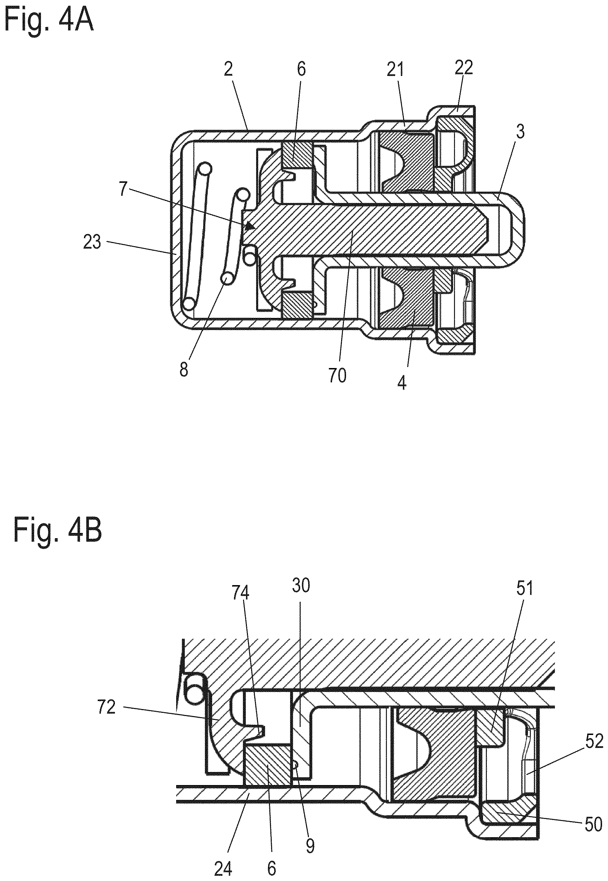

Soll nun eine Bewegung gedämpft werden, beispielsweise eine Bewegung eines Beschlages, wie eines Scharniers oder einer Auszugsführung, wird die Kolbenstange 3 in das topfförmige Gehäuse 2 eingeschoben, wie dies in den Figuren 4A und 4B gezeigt ist. Durch das Einschieben der Kolbenstange 3 wird das Drosselelement 6 weiter gegen den Halter 30 gedrückt, und das Dämpfungsfluid durchströmt den Strömungskanal 9, um von der linken Seite zur rechten Seite des Kolbens in Figur 4A zu gelangen. Das Drosselelement 6 ist dabei an einem inneren Umfang des zylindrischen Abschnittes 24 geführt. Durch das Einschieben der Kolbenstange 3 in das Gehäuse 2 wird für das Dämpfungsfluid ein gewisses Volumen verdrängt, was dadurch kompensiert wird, dass die Dichtung 4 geringfügig zur Öffnung des Gehäuses 2 verschoben wird. Dabei drückt die Dichtung 4 gegen das Innenteil 51, das gegen die Kraft der Federarme 52 relativ zu dem Außenteil 50 bewegt wird.

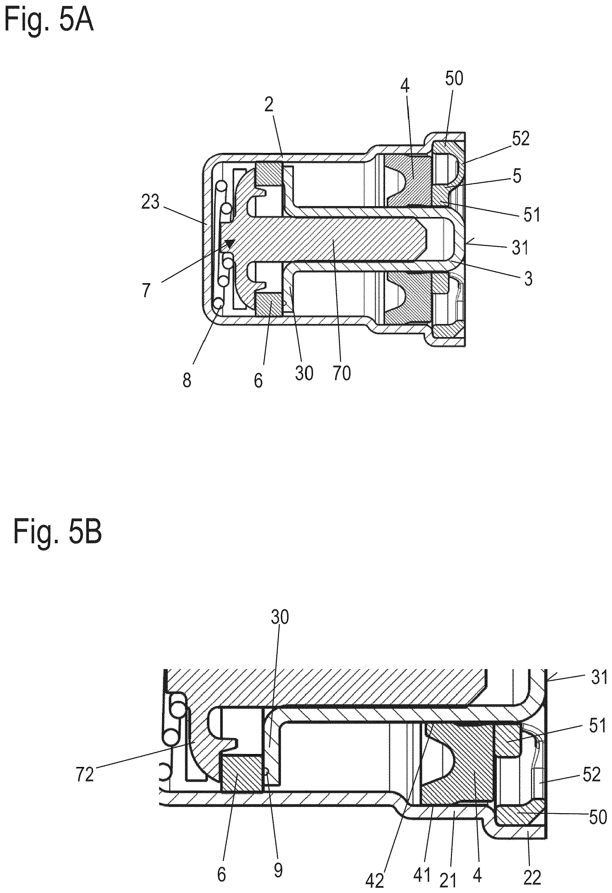

In Figur 5A und 5B ist die Kolbenstange 3 in der vollständig eingefahrenen Position gezeigt und eine Oberfläche 31 an einer Stirnseite der Kolbenstange 3 ist im Wesentlichen auf einer Ebene mit einer Öffnung des Gehäuses 2 angeordnet. Die Dichtung 4 wurde noch etwas weiter zur Öffnung des Gehäuses 2 verschoben, wodurch das Innenteil 51 gegen die Kraft der Federarme 52 bewegt wurde. Die Federn 8 liegt nun flach auf dem Boden 23 des Gehäuses 2 auf, wobei die einzelnen Wicklungen der Feder 8 ineinandergreifen.

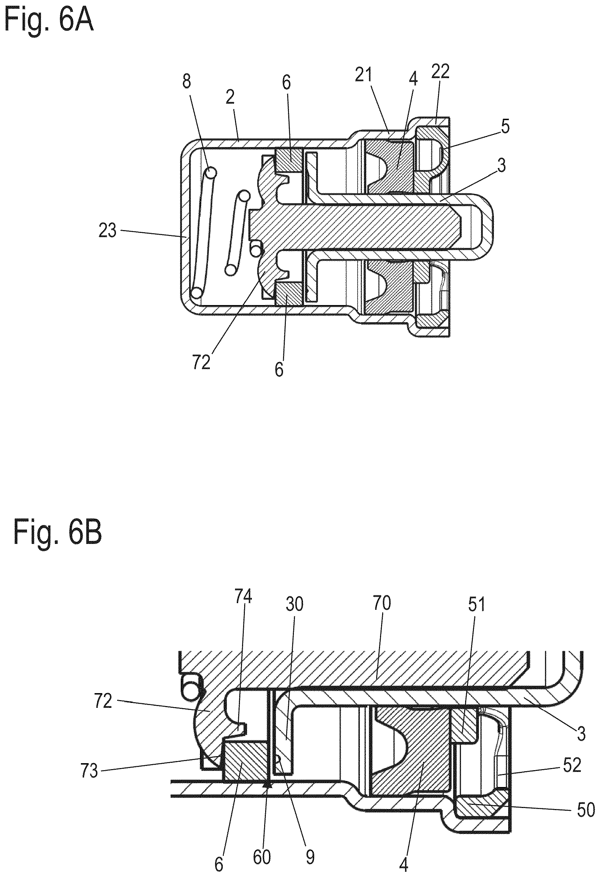

Für eine Rückstellbewegung kann die Kolbenstange 3 nun wieder in eine ausgefahrene Position bewegt werden, wobei die Ausfahrbewegung leichtgängiger erfolgen soll, also mit geringeren Dämpfungskräften als beim Einfahren der Kolbenstange 3. Wie in den Figuren 6A und 6B gezeigt ist, wird bei einer Ausfahrbewegung der Kolbenstange 3 die Feder 8 wieder entspannt, die das Fixierelement 7 zusammen mit der Kolbenstange 3 in die ausgefahrene Position drückt. Der Strömungskanal 9 wird im Querschnitt vergrößert, indem das Drosselelement 6 geringfügig von dem Strömungskanal 9 und dem Halter 30 abgehoben wird, so dass ein Spalt 60 entsteht. Durch diesen Spalt 60 kann das Dämpfungsfluid beim Ausfahren der Kolbenstange 3 nun von der rechten Seite des Halters 30 zu der linken Seite strömen, so dass die Bewegung der Kolbenstange 3 vergleichsweise leichtgängig erfolgt, da der Strömungsquerschnitt vergrößert ist. Die Erzeugung eines Spalts 60 wird dadurch ermöglicht, dass das Drosselelement 6 federnd durch das Federelement 72 gehalten ist und durch einen gewissen Druckunterschied zwischen den beiden Kammern, beispielsweise von 0,1 bar, das Drosselelement 6 gegen die Kraft des Federelementes 72 von dem Halter 30 abgehoben wird. Beim Verschieben der Kolbenstange 3 drückt des Federelement 72 nicht mehr auf den Halter 30, hält das Drosselelement 6 allerdings so, dass dieser dem Halter 30 nachgeführt wird, wobei im Wesentlichen nur Reibungskräfte überwunden werden müssen.

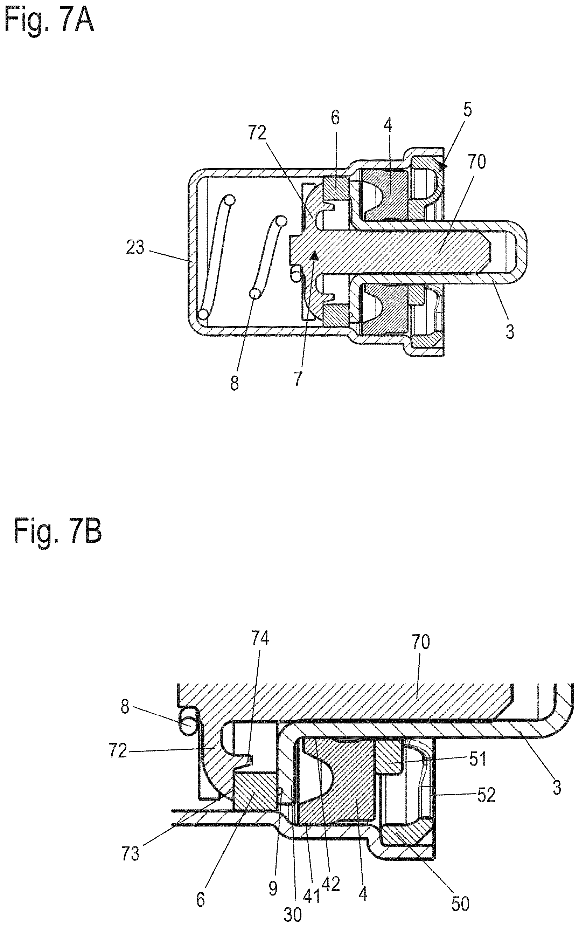

Wenn die Ausfahrbewegung der Kolbenstange 3 abgeschlossen ist, wie dies in den Figuren 7A und 7B gezeigt ist, findet ein Druckausgleich zwischen den beiden Kammern statt, und das Drosselelement 6 wird nun durch das Federelement 72 wieder gegen den Halter 30 gedrückt, so dass der Strömungskanal 9 wieder im Querschnitt reduziert ist. Beim Herausfahren der Kolbenstange 3 wird zudem das Volumen für die Dämpfungsflüssigkeit in dem Gehäuse 2 wieder vergrößert, so dass die Dichtung 4 aufgrund der Kraft der Federarme 52 durch das Innenteil 51 in das Gehäuse 2 gedrückt wird. Dadurch kann sich die Dichtung 4 in das Gehäuse 2 an der Stufe 21 bewegen. Die Figuren 7A und 7B entsprechen daher der Ausgangsposition der Figuren 3A und 3B.

In dem dargestellten Ausführungsbeispiel ist ein einziger Strömungskanal 9 in dem Halter 30 ausgespart. Der Strömungskanal 9 kann radial, helixförmig oder mit anderer Geometrie verlaufen und wird zumindest über einen Abschnitt durch das Drosselelement 6 verschlossen. Es ist natürlich möglich, mehrere Strömungskanäle 9 an dem Halter 30 und/oder dem Drosselelement 6 vorzusehen. Das Drosselelement 6 ist dabei an dem Fixierelement 7 gehalten, wobei an dem Federelement 72 ein Vorsprung 74 zur Zentrierung des Drosselelementes 6 ausgebildet ist. Es ist auch möglich, das Drosselelement 6 an den Federarmen 72 über Befestigungsmittel zu fixieren oder direkt zu verkleben. Das Material des Drosselelementes 6 ist vorzugsweise hart und kann an der zu dem Strömungskanal 9 gewandten Seite beschichtet sein.

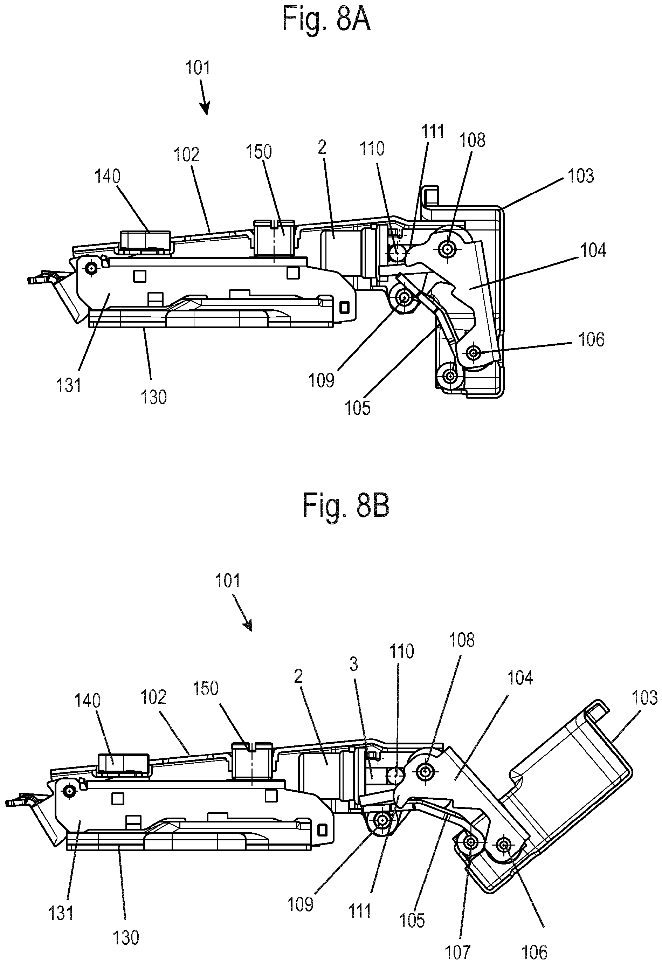

In den Figuren 8A und 8B ist der erfindungsgemäße Dämpfer in einem Scharnier 101 gezeigt. Das Scharnier 101 umfasst ein Seitenteil 102, das über ein Zwischenstück 131 an einer Montageplatte 130 festgelegt ist. Das Seitenteil 102 ist dabei über eine Höhenverstellung 140 und eine Tiefenverstellung 150 verstellbar gehalten. In dem Seitenteil 102 ist das Gehäuse 2 des Dämpfers fixiert. An dem Seitenteil 102 ist ein Scharnierteil 103 verschwenkbar gelagert, wobei hierfür ein erster Hebel 104 und ein zweiter Hebel 105 vorgesehen sind, die über vier Drehachsen 106, 107, 108 und 109 für eine Verbindung zwischen Seitenteil 102 und Scharnierteil 103 sorgen. An dem Hebel 104 ist eine Kurvenführung 111 ausgebildet, die auf einen Stift 110 drückt, um die Kolbenstange 3 in das Gehäuse 2 einzuschieben oder die Kolbenstange 3 freizugeben, damit diese durch die Kraft der Feder 8 wieder in die ausgefahrene Stellung bewegt werden kann. In Figur 8A ist dabei die geschlossene Position des Scharniers 101 gezeigt, in der die Kolbenstange 3 eingefahren ist, während in Figur 8B eine Öffnungsposition mit ausgefahrener Kolbenstange 3 gezeigt ist.

Der erfindungsgemäße Dämpfer 1 kann statt in einem Scharnier 101 auch in anderen Beschlägen eingesetzt werden, beispielswiese in Siebengelenkscharnieren, bei Auszugsführungen, Schiebetüren oder allen anderen Beschlagselementen, bei denen ein kompakter Dämpfer erforderlich ist. Der Dämpfer 1 besitzt vorzugsweise einen maximalen Hub der Kolbenstange 3 von weniger als 5 mm, insbesondere 3 bis 4,5 mm, und die Erstreckung des Dämpfers 1 in Längsrichtung ist vorzugsweise kleiner als 20 mm, insbesondere kleiner 18 mm, so dass ein sehr kompakter Aufbau vorhanden ist.

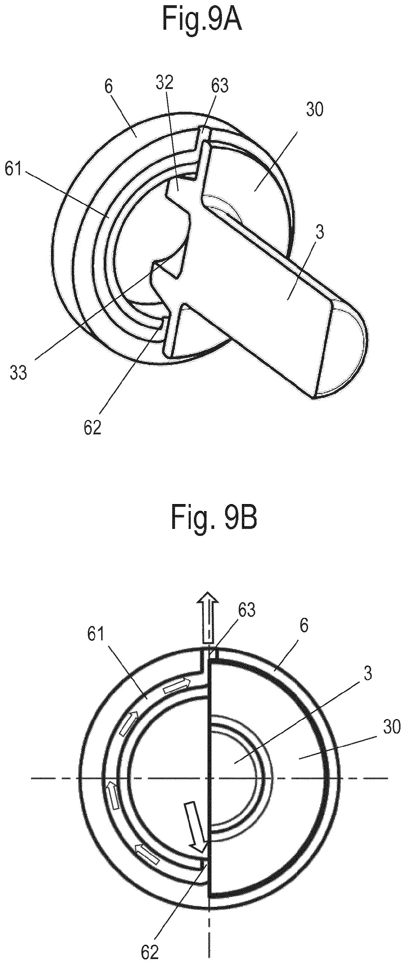

In den Figuren 9A und 9B ist ein Teil eines modifizierten Dämpfers mit einem Drosselelement 6 gezeigt, das durch eine Kolbenstange 3 bewegbar ist. Das Drosselelement 6 ist als Kolbenring ausgebildet und weist an der zu dem ring- oder scheibenförmig ausgebildeten Halter 30 einen Strömungskanal 61 auf. Der Strömungskanal 61 ist nut- oder kanalförmig zu dem Halter 30 hin geöffnet. Durch den Kontakt einer Oberfläche des Drosselelementes 6 an dem Halter 30 wird der Strömungskanal 61 in Richtung Halter 30geschlossen. Der Strömungskanal 61 weist eine erste Mündung 62 auf, die sich in radiale Richtung erstreckt und an einer Innenseite des Drosselelementes 6 endet, sowie eine zweite Mündung 63, die sich radial nach außen erstreckt und an einer Außenseite des Drosselelementes 6 mündet. Die Mündungen 62 und 63 sind dabei bezogen auf eine Achse der Kolbenstange 3 in einem winkelförmigen Versatz angeordnet, insbesondere zwischen 90° und 270°, so dass der überwiegende Teil des Strömungskanals 61 im Wesentlichen parallel zu einem äußeren Umfang des Drosselelementes 6 verläuft. Auch andere Geometrien des Strömungskanals sind möglich, dieser kann beispielsweise mäanderförmig, wellenförmig oder in geraden Abschnitten entlang einer Oberfläche des Drosselelementes 6 ausgespart sein.

Das Drosselelement 6 wird durch die Kolbenstange 3 bewegt, die einen ring- oder scheibenförmigen Halter 30 aufweist. Ferner ist integral mit der Kolbenstange 3 ein Ring 32 ausgebildet, der in das Drosselelement 6 eingreift. In dem Ring 32 ist eine Aufnahme 33 ausgebildet, in die ein verkürzter Stift 70 eines Fixierelementes eingreifen kann.

Bei Beaufschlagung des Dämpfers durch eine Kraft der Kolbenstange 3 in axiale Richtung wird der Strömungskanal 61 durchströmt, wie dies in Figur 9B gezeigt ist. Das Fluid in dem Dämpfer durchströmt dann den Strömungskanal von der ersten Mündung 62 zu der zweiten Mündung 63.

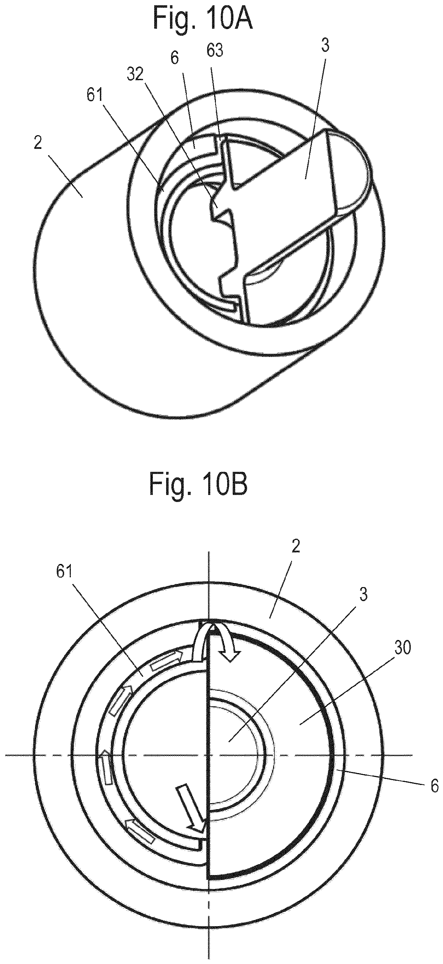

In den Figuren 10A und 10B ist das Drosselelement 6 der Figur 9 in einer schematischen Darstellung in dem Gehäuse 2 gezeigt. Das Gehäuse 2 ist im Bereich der Aufnahme für das Drosselelement 6 zylindrisch ausgebildet und führt das Drosselelement 6 in axiale Richtung. Dadurch werden die beim Bewegen der Kolbenstange 3 relativ zu dem Gehäuse erforderlichen Dämpfungskräfte erzeugt.

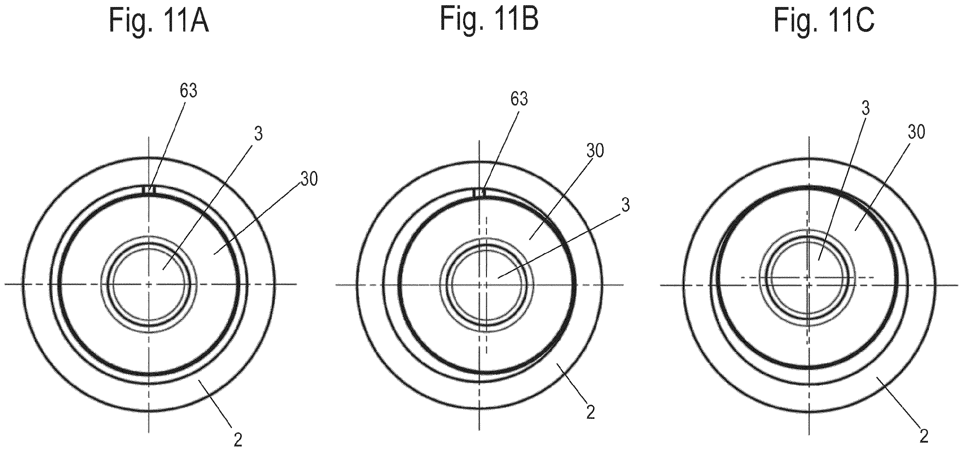

In den Figuren 11A bis 11C ist der Dämpfer der Figur 10 gezeigt. In Figur 11A ist der Halter 30 dabei zentrisch angeordnet, und es ist ein im Wesentlichen gleichmäßiger Spalt zwischen dem Halter 30 und dem Gehäuse 2 vorgesehen, so dass das Dämpfungsfluid aus der zweiten Mündung 63 strömen kann. In einer belasteten Position ist es allerdings möglich, dass der Halter 30 nicht zentrisch angeordnet ist und beispielsweise an einer Wand des Gehäuses 2 anliegt, wie dies in Figur 11B gezeigt ist. In dieser Position ist die Krafteinleitung durch die Kolbenstange 3 außermittig, die Mündung 63 wird allerdings durch den Halter 30 nicht überdeckt. Es kann allerdings passieren, dass gemäß Figur 11C der Halter 30 die Mündung 63 überdeckt, so dass der Strömungskanal 61 im Bereich der Mündung 63 verschlossen wird.

Gleichermaßen ist eine Fehlstellung der Halters 30 zum Drosselelement 6 möglich, sodass, hier nicht dargestellt, die innere Mündung 62 des Strömungskanals 61 teilweise oder vollständig durch den Ring 32 abgedeckt wird. Dadurch ändern sich die Dämpfungskräfte, da durch den zusätzlichen Strömungswiderstand an der Mündung 62, 63 zum Halter 30 oder Ring 32 erhöhte Kräfte notwendig sind, um den Kolben 3 zu bewegen.

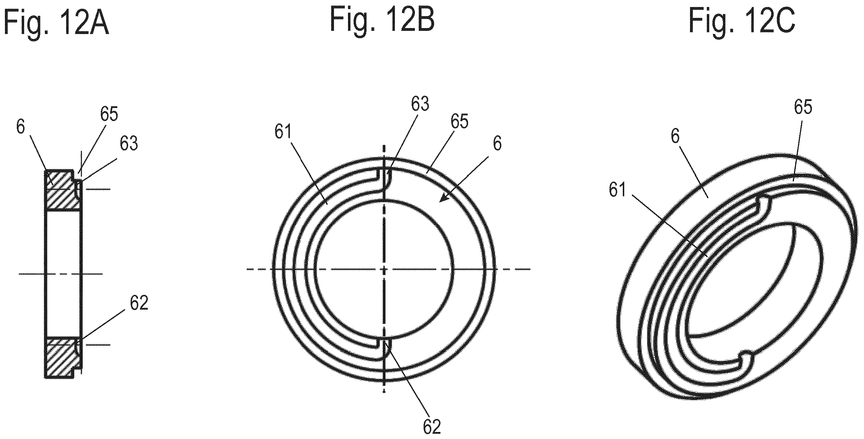

Um den Einfluss einer außerzentrischen Anordnung des Halters 30 zu reduzieren, wird bei dem Drosselelement 6 der Figuren 12A bis 12C im Bereich der Mündung 63 eine Stufe 65 ausgebildet, die als winkelförmige Aussparung gestaltet ist, die sich über den gesamten Umfang des Drosselelementes 6 erstreckt. Es ist natürlich auch möglich, die Stufe 65 nur in einem Bereich der Mündung 63 vorzusehen und nicht über den gesamten Umfang. Dadurch wird die Mündung 63 radial nach innen versetzt angeordnet, und der Strömungskanal endet an der Mündung 63 in der Aussparung oder Stufe 65.

Um die Engstelle an der Mündung 62 zu beheben, kann auch hier eine Stufe ausgebildet werden, die als winkelförmige Aussparung gestaltet ist, die sich über den gesamten Umfang des Drosselelementes 6 erstreckt. Es ist natürlich auch möglich, diese Stufe nur in einem Bereich der Mündung 62 vorzusehen und nicht über den gesamten Umfang. Dadurch wird die Mündung 62 radial nach außen versetzt angeordnet, und der Strömungskanal endet an der Mündung 62 in der Aussparung oder Stufe.

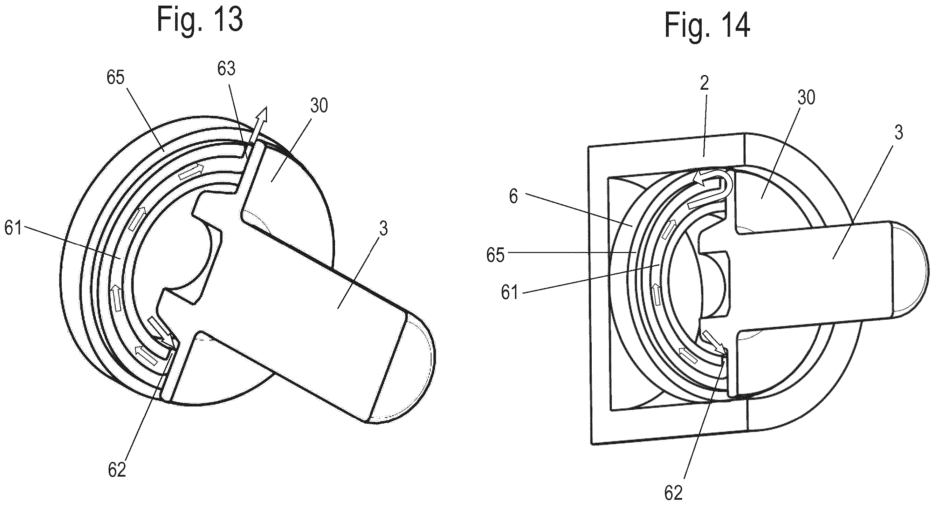

Wie in Figur 13 gezeigt ist, kann der Halter 30 nun den Strömungskanal 61 im Bereich der Mündung 63 überdecken, ohne dass dies Einfluss auf das Dämpfungsverhalten hat, denn der Strömungsweg des Dämpfungsfluides von der inneren Mündung 62 durch den Strömungskanal 61 zu der Mündung 63 ist unabhängig von der Position des Halters 30, und im Bereich der Mündung 63 strömt das Dämpfungsfluid in die Stufe 65 und kann dort verteilt werden. Selbst wenn der Halter 30 die Mündung 63 überdeckt, wie dies in Figur 14 dargestellt ist, kann das Fluid nun in die Stufe 65 strömen und dort im Bereich des Umfangs des Drosselelementes 6 verteilt werden.

### Bezugszeichenliste

- 1: Dämpfer
- 2: Gehäuse
- 3: Kolbenstange
- 4: Dichtung
- 5: Deckel
- 6: Drosselelement
- 7: Fixierelement
- 8: Feder
- 9: Strömungskanal
- 20: Innenraum
- 21: Stufe
- 22: Stufe
- 23: Boden
- 24: Abschnitt
- 30: Halter
- 31: Oberfläche
- 32: Ring
- 33: Aufnahme
- 40: Öffnung
- 41: Dichtlippe
- 42: Dichtlippe
- 50: Außenteil
- 51: Innenteil
- 52: Federarm
- 60: Spalt
- 61: Strömungskanal
- 62: Mündung
- 63: Mündung
- 65: Stufe
- 70: Stift
- 71: Basis
- 72: Federelement
- 73: Kontaktfläche
- 74: Vorsprung
- 80: Ende
- 81: Ende
- 101: Scharnier
- 102: Seitenteil
- 103: Scharnierteil
- 104: Hebel
- 105: Hebel
- 106: Drehachse
- 107: Drehachse
- 108: Drehachse
- 109: Drehachse
- 110: Stift
- 111: Kurvenführung
- 130: Montageplatte
- 131: Zwischenstück
- 140: Höhenverstellung
- 150: Tiefenverstellung

## Patentansprüche

1. Dämpfer (1) für Beschläge für Möbel oder Haushaltsgeräte, mit einem Gehäuse (2), in dem ein mit einer Kolbenstange (3) verbundener Kolben linear verschiebbar geführt ist, der einen Innenraum (20) in dem Gehäuse (2) in zwei Kammern unterteilt, wobei an oder in dem Kolben mindestens ein Strömungskanal (9) ausgebildet ist, der die beiden Kammern miteinander verbindet, wobei ein Drosselelement (6) vorgesehen ist, das in einer Dämpfungsposition bei einer Bewegung des Kolbens in eine erste Richtung den Querschnitt des mindestens einen Strömungskanals (9) zur Erzeugung hoher Dämpfungskräfte gering hält und bei einer Bewegung des Kolbens in die zur ersten Richtung gegenüberliegende zweite Richtung den Querschnitt des mindestens einen Strömungskanals (9) zur Reduzierung der Dämpfungskräfte durch eine Bewegung des Drosselelements (6) vergrößert, wobei das Drosselelement (6) durch mindestens ein Federelement (72) in die Dämpfungsposition vorgespannt ist und der Kolben über eine Feder (8) in eine Position mit ausgefahrener Kolbenstange (3) vorgespannt ist, **dadurch gekennzeichnet, dass** das Drosselelement (6) als Kolbenring ausgebildet ist und ein an der Kolbenstange (3) festgelegtes Fixierelement (7) ein integral ausgebildetes Federelement (72) aufweist, mittels dem der Kolbenring zu einem mit der Kolbenstange (3) verbundenen Halter (30) vorgespannt ist.

2. Dämpfer nach Anspruch 1, **dadurch gekennzeichnet, dass** das Drosselelement (6) und das mindestens eine Federelement (72) aus unterschiedlichen Materialien hergestellt sind.

3. Dämpfer nach Anspruch 1 oder 2, **dadurch gekennzeichnet, dass** ein Fixierelement (7) vorgesehen ist, das mit einem Stift (70) in der hülsenförmigen Kolbenstange (3) festgelegt ist und vorzugsweise durch Klemmkräfte gehalten ist.

4. Dämpfer nach einem der vorhergehenden Ansprüche, **dadurch gekennzeichnet, dass** das Gehäuse (2) topfförmig ausgebildet ist und an einem Bereich benachbart zu einer Öffnung eine Dichtung (4) aufweist, die eine innere Öffnung (40) zur Durchführung der Kolbenstange (3) aufweist.

5. Dämpfer nach Anspruch 4, **dadurch gekennzeichnet, dass** die Dichtung (4) für einen Volumenausgleich durch das Einschieben oder Herausziehen der Kolbenstange (3) verschiebbar an dem Gehäuse (2) gelagert ist.

6. Dämpfer nach Anspruch 4 oder 5, **dadurch gekennzeichnet, dass** die Dichtung (4) über einen Deckel (5) in dem Gehäuse (2) gehalten ist.

7. Dämpfer nach Anspruch 6, **dadurch gekennzeichnet, dass** der Deckel (5) ein an dem Gehäuse (2) festgelegtes Außenteil (50) und ein an der Dichtung (4) liegendes Innenteil (51) aufweist, wobei das Außenteil (50) mit dem Innenteil (51) über mindestens einen Federarm (52) verbunden ist.

8. Dämpfer nach einem der vorhergehenden Ansprüche, **dadurch gekennzeichnet, dass** an dem topfförmigen Gehäuse (2) auf der zu einem Boden (23) gegenüberliegenden Seite mindestens eine Stufe (21, 22) zur Aufnahme einer verschiebbaren Dichtung (4) und/oder einem Deckel (5) vorgesehen ist.

9. Dämpfer nach einem der vorhergehenden Ansprüche, **dadurch gekennzeichnet, dass** der maximale Hub der Kolbenstange (3) kleiner als 6 mm ist, insbesondere zwischen 3 mm bis 5 mm.

10. Dämpfer nach einem der vorhergehenden Ansprüche, **dadurch gekennzeichnet, dass** das Drosselelement (6) als Kolbenring ausgebildet ist, an dem ein Strömungskanal (61) vorgesehen ist, der eine erste Mündung (62) an einer Innenseite und eine zweite Mündung (63) an einer Außenseite in radialer Richtung gesehen aufweist.

11. Dämpfer nach Anspruch 10, **dadurch gekennzeichnet, dass** zumindest an einer Mündung (62, 63) eine Stufe (65) als Aussparung vorgesehen ist.

12. Scharnier, insbesondere für Möbel oder Haushaltsgeräte, mit einem Dämpfer (1) nach einem der vorhergehenden Ansprüche.

## Claims

1. Damper (1) for fittings for furniture or domestic appliances, having a housing (2) in which a piston which is connected to a piston rod (3) is guided in a linearly displaceable manner and divides an interior space (20) in the housing (2) into two chambers, wherein at least one flow channel (9) which connects the two chambers to one another is formed on or in the piston, wherein a throttle element (6) is provided, which, in a damping position, keeps the cross-section of the at least one flow channel (9) small when the piston moves in a first direction in order to generate high damping forces, and when the piston moves in the second direction opposite to the first direction, increases the cross-section of the at least one flow channel (9) for reducing the damping forces by a movement of the throttle element (6), whereby the throttle element (6) is pretensioned into the damping position by at least one spring element (72) and the piston is pretensioned via a spring (8) into a position with extended piston rod (3), **characterized in that** the throttle element (6) is designed as a piston ring and a fixing element (7) fixed to the piston rod (3) has an integrally formed spring element (72) by means of which the piston ring is pretensioned towards a holder (30) connected to the piston rod (3).

2. Damper according to claim 1, **characterized in that** the throttle element (6) and the at least one spring element (72) are made of different materials.

3. Damper according to claim 1 or 2, **characterized in that** a fixing element (7) is provided which is fixed with a pin (70) in the sleeve-shaped piston rod (3) and is preferably held by clamping forces.

4. Damper according to one of the preceding claims, **characterized in that** the housing (2) is pot-shaped and has, at an area adjacent to an opening, a seal (4) which has an inner opening (40) for the piston rod (3) to pass through.

5. Damper according to claim 4, **characterized in that** the seal (4) is displaceably mounted on the housing (2) for volume compensation by the insertion or withdrawal of the piston rod (3).

6. Damper according to claim 4 or 5, **characterized in that** the seal (4) is held in the housing (2) via a cover (5).

7. Damper according to claim 6, **characterized in that** the cover (5) has an outer part (50) fixed to the housing (2) and an inner part (51) lying on the seal (4), wherein the outer part (50) is connected to the inner part (51) via at least one spring arm (52).

8. Damper according to one of the preceding claims, **characterized in that** at least one step (21, 22) for receiving a displaceable seal (4) and/or a cover (5) is provided on the pot-shaped housing (2) on the side opposite a base (23).

9. Damper according to one of the preceding claims, **characterized in that** the maximum stroke of the piston rod (3) is less than 6 mm, in particular between 3 mm and 5 mm.

10. Damper according to one of the preceding claims, **characterized in that** the throttle element (6) is formed as a piston ring on which is provided a flow channel (61) having a first orifice (62) on an inside and a second orifice (63) on an outside as seen in a radial direction.

11. Damper according to claim 10, **characterized in that** at least one step (65) is provided as a recess at an orifice (62, 63).

12. Hinge, in particular for furniture or household appliances, having damper (1) according to one of the preceding claims.

## Revendications

1. Amortisseur (1) pour des ferrures de meubles ou d'appareils ménagers, avec un boîtier (2) dans lequel un piston relié à une tige de piston (3) est guidé de manière à pouvoir coulisser linéairement et divise un espace intérieur (20) du boîtier (2) en deux chambres, dans lequel au moins un canal d'écoulement (9) qui relie les deux chambres l'une à l'autre est formé sur ou dans le piston, dans lequel il est prévu un élément d'étranglement (6) qui, dans une position d'amortissement, maintient la section transversale du au moins un canal d'écoulement (9) petite lorsque le piston se déplace dans une première direction afin de générer des forces d'amortissement élevées, et qui, lorsque le piston se déplace dans une deuxième direction opposée à la première, augmente la section transversale du au moins un canal d'écoulement (9) pour réduire les forces d'amortissement par un mouvement de l'élément d'étranglement (6), l'élément d'étranglement (6) étant précontraint dans la position d'amortissement par au moins un élément de ressort (72) et le piston étant précontraint par l'intermédiaire d'un ressort (8) dans une position avec une tige de piston étendue (3), **caractérisé en ce que** l'élément d'étranglement (6) est conçu comme un segment de piston et un élément de fixation (7) fixé à la tige de piston (3) présente un élément de ressort (72) formé d'un seul tenant au moyen duquel le segment de piston est précontraint pour former un support (30) relié à la tige de piston (3).

2. Amortisseur selon la revendication 1, **caractérisé en ce que** l'élément d'étranglement (6) et le au moins un élément de ressort (72) sont faits de matériaux différents.

3. Amortisseur selon la revendication 1 ou 2, **caractérisé en ce qu'il** est prévu un élément de fixation (7) qui est fixé avec une goupille (70) dans la tige de piston (3) en forme de manchon et est de préférence maintenu par des forces de serrage.

4. Amortisseur selon l'une des revendications précédentes, **caractérisé en ce que** le boîtier (2) est en forme de pot et présente, dans une zone adjacente à une ouverture, un joint (4) qui présente une ouverture intérieure (40) pour le passage de la tige de piston (3).

5. Amortisseur selon la revendication 4, **caractérisé en ce que le** joint (4) est monté de façon déplaçable sur le boîtier (2) pour une compensation de volume par l'insertion ou le retrait de la tige de piston (3).

6. Amortisseur selon la revendication 4 ou 5, **caractérisé en ce que** le joint (4) est maintenu dans le boîtier (2) par un couvercle (5).

7. Amortisseur selon la revendication 6, **caractérisé en ce que** le couvercle (5) présente une partie extérieure (50) fixée au boîtier (2) et une partie intérieure (51) reposant sur le joint (4), la partie extérieure (50) étant reliée à la partie intérieure (51) par au moins un bras de ressort (52).

8. Amortisseur selon l'une des revendications précédentes, **caractérisé en ce qu'au** moins une étape (21, 22) de réception d'un joint (4) et/ou d'un couvercle (5) déplaçable est prévue sur le boîtier (2) en forme de pot, du côté opposé à un fond (23).

9. Amortisseur selon l'une des revendications précédentes, **caractérisé en ce que** la course maximale de la tige de piston (3) est inférieure à 6 mm, notamment comprise entre 3 mm et 5 mm.

10. Amortisseur selon l'une des revendications précédentes, **caractérisé en ce que** l'élément d'étranglement (6) est réalisé sous la forme d'un segment de piston sur lequel est prévu un canal d'écoulement (61) présentant un premier orifice (62) sur un côté intérieur et un second orifice (63) sur un côté extérieur, vu dans une direction radiale.

11. Amortisseur selon la revendication 10, **caractérisé en ce qu'une** marche (65) est prévue comme un évidement au niveau d'au moins un orifice (62, 63).

12. Charnière, notamment pour meubles ou appareils ménagers, comportant un amortisseur (1) selon l'une des revendications précédentes.
